# EUROPÄISCHE PATENTANMELDUNG

(11) **EP 1 132 193 A1**
(43) Veröffentlichungstag der Anmeldung: **12.09.2001**
(21) Anmeldenummer: 00103949.4
(22) Anmeldetag: 25.02.2000
(51) Int. Cl.: B29C 70/00, B29C 53/80, B29C 63/02

(54) **Vorrichtung sowie Verfahren zum Anordnen und Verbinden einer vorgespannten, als Meterware ausgebildeten Faseranordnung auf einer Oberfläche**

(71) Anmelder: ABB RESEARCH LTD., 8050 Zürich (CH)
(72) Erfinder: Mallick, Vishal, Dr., 5413 Birmenstorf (CH); Meynard, Francois, Dr., 1204 Genève (CH); Parfrey, Karl, Dr., Houston, TX 77064 (US)
(74) Vertreter: ABB Patent Attorneys

(57) **Zusammenfassung**

Beschrieben wird eine Vorrichtung und ein Verfahren zum Anordnen und Verbinden einer vorgespannten, als Meterware ausgebildeten Faseranordnung (3) auf einer Oberfläche (5), mit einer Zuführeinheit (2), die die Faseranordnung (3) bereitstellt und gegenüber der Oberfläche (5) einstellbar vorspannt sowie einer Anpresseinheit (1), die die Faseranordnung (3) gegen die Oberfläche (5) druckbeaufschlagt mit veränderbaren Anpreßdruck in innigen Kontakt bringt.

Die Erfindung zeichnet sich dadurch aus, daß die Anpresseinheit (1) sowie die Zuführeinheit (2) in einer kompakten Einheit integriert sind, und daß beide Einheiten derart ansteuerbar sind, daß die Stärke mit der die Anpresseinheit (1) die Faseranordnung (3) gegen die Oberfläche (5) drückt in Abhängigkeit von der Vorspannung der Zuführeinheit (2) erfolgt.

## Beschreibung

### Technisches Gebiet

Die Erfindung bezieht sich auf eine Vorrichtung sowie Verfahren zum Anordnen und Verbinden einer vorgespannten, als Meterware ausgebildeten Faseranordnung auf einer Oberfläche, mit einer Zuführeinheit, die die Faseranordnung bereitstellt und gegenüber der Oberfläche einstellbar vorspannt, sowie einer Anpresseinheit, die die Faseranordnung gegen die Oberfläche druckbeaufschlagt mit veränderbaren Anpreßdruck in innigen Kontakt bringt.

### Stand der Technik

In weiten Bereichen des Maschinenbaus sowie der allgemeinen Gerätetechnik werden hohe Anforderungen an einzelne Bauteile in puncto Robustheit, möglichst geringes Gewicht und Langlebigkeit gestellt, die vielfach aufgrund der bisherigen Verwendung konventioneller, metallischer Werkstoffe für die Herstellung der jeweiligen Bauteile bereits aus Gründen des hohen spezifischen Gewichtes nicht mehr erfüllt werden können.

Hingegen sind moderne faserverstärkte Verbundwerkstoffe hinsichtlich ihrer Belastbarkeit, Langlebigkeit und Steifigkeit, um nur einige vorteilhafte Eigenschaften zu nennen, durchaus in der Lage mit metallischen Materialien und insbesondere mit Leichtmetallen mitzuhalten.

Insbesondere bei Geräten oder Maschinen, in denen einzelne Bauteile ohne großen Energieaufwand zu beschleunigen sind oder hohen Zentrifugalkräften ausgesetzt sind, eignen sich faserverstärkte Verbundwerkstoffe aufgrund ihrer hohen Festigkeit und Steifigkeit und insbesondere aufgrund ihres nur geringen Gewichtes, wodurch diese Werkstoffe vielfach metallischen Materialien überlegen sind. Selbst im Vergleich zwischen leichtmetallische Materialien, wie beispielsweise Aluminium oder Titanlegierungen, sind hochmoderne faserverstärkte Verbundwerkstoffe hinsichtlich ihres Stabilitäts-/Gewichtsverhältnisses sowie Steifigkeits-/Gewichtsverhältnisses den Leichtmetallen weitaus überlegen.

Von besonderer Bedeutung sind unter den allgemein bezeichneten Verbundwerkstoffen jene zu nennen, die auf faserverstärkten Polymeren basieren. Klassische Vertreter derartiger faserverstärkter Verbundwerkstoffe sind glasfaserverstärkte Kunststoffe, die jedoch hinsichtlich ihres relativ hohen spezifischen Gewichtes durch leichtgewichtige Carbonfaserverbundwerkstoffe verdrängt werden und an Bedeutung verlieren.

Es müssen jedoch große Anstrengungen unternommen werden die vorstehend genannten physikalischen Eigenschaften bei der Verarbeitung von Faserverbundwerkstoffe zu erhalten, insbesondere wenn komplizierte Bauteilformen aus eben diesen Verbundwerkstoffen geformt werden sollen. Besonders großes Augenmerk ist bei der Herstellung von Bauteilen aus faserverstärkten Verbundwerkstoffen auf die gegenseitige Orientierung der einzelnen zu verlegenden Fasern zu legen, die je nach Lagenabfolge in unterschiedliche Richtungen zu verlegen sind.

Herkömmliche Fabrikationsmethoden sehen ein manuelles Auflegen einer Fasermatte, die mit einem thermisch aushärtbaren Harz vorbehandelt ist, auf eine formgebende Oberfläche vor, die nachfolgend in ein abgeschlossenes Behältnis eingebracht wird und unter bestimmten Druck- und Temperaturbedingungen vollständig aushärtet. Nach dem erfolgten Aushärtevorgang wird der ausgehärtete, faserverstärkte Verbundwerkstoff von der formgebenden Oberfläche getrennt und zur Qualitätsprüfung beispielsweise mittels Ultraschall untersucht. Nachteilig bei dieser bekannten Verfahrensweise zur Herstellung faserverstärkter Verbundwerkstoffe ist der hohe Arbeitseinsatz sowie die überaus hohe Ausschußrate und die nur begrenzte Reproduzierbarkeit von baugleichen Bauteilen.

Insbesondere bei der Herstellung rotationssymmetrischer Bauteile, die aus den vorstehend genannten faserverstärkten Verbundwerkstoffen gefertigt werden, sind Techniken bekannt, mit denen die vorstehend genannten Unzulänglichkeiten umgangen werden können. Im Rahmen sogenannter Faserwicklungsherstellverfahren ist es möglich, die Bauteile automatisch mit einer zuverlässigen Reproduzierbarkeit im Rahmen einer Massenproduktion zu fertigen. Hierbei wird ein Strang aus einer Vielzahl, als Meterware vorliegenden einzelnen Fasern ineinander verwoben und auf eine rotierende Spindel oder auf einen rotationssymmetrischen Körper aufgewickelt. Bevor jedoch der aus einzelnen Fasern bestehende Strang die Oberfläche der Spindel erreicht, auf der der Strang aufgewickelt wird, werden die einzelnen Fasern innerhalb des Strangs durch ein Harzbad geführt und auf diese Weise mit Harz durchtränkt. Der im folgenden unter Zugspannung auf die Spindel aufgewickelte Strang behält lediglich eine Mindestmenge an Flüssigharz und schmiegt sich weitgehend lückenlos auf die Kontur der Spindel an. In einem nachfolgenden Erwärmungsprozeß innerhalb eines Ofens härtet das Harz aus und bildet nach Ablösen von der Spindel einen aus faserverstärkten Verbundmaterial gefertigten dreidimensionalen Körper. Beispielsweise lassen sich auf diese Weise Ruderstangen für den Sportbereich herstellen.

Die vorstehend bekannte Technik des Faserwicklungsherstellverfahren ermöglicht es jedoch nur, Körper zu fertigen, die sich durch Drehung um eine Rotationsachse ergeben. Flachverlaufende Oberflächen oder einseitig geöffnete Bauteile sind auf diese Weise nicht herstellbar. Auch ist der Faserverlauf relativ zu der Oberfläche des auf diese Weise herzustellenden Körpers durch die Orientierung der Rotationsachse, um die sich der Körper dreht, vorgegeben. Beliebige Faserverläufe sind daher nicht realisierbar, insbesondere Faserverläufe parallel zur Rotationsachse des Grundkörpers.

Aus der Technik der Faserwicklung entwickelte sich die Technik der sogenannten Faseranordnung, die die vorstehend beschriebenen Nachteile zu umgehen vermag. So wird anstelle einer Wicklung von einem mit Harz durchtränkten Faserstrang um eine Spindel ein bandförmig, aus Fasern zusammengesetzter Strang, mit Hilfe eines entsprechenden Werkzeugkopfes auf eine Oberfläche paßgenau und formgetreu aufgebracht. Der bandförmig ausgebildete Strang ist vorab ebenso mit einem Harz durchtränkt und wird mit Hilfe eines Anpreßwerkzeuges gegen die Oberfläche gedrückt.

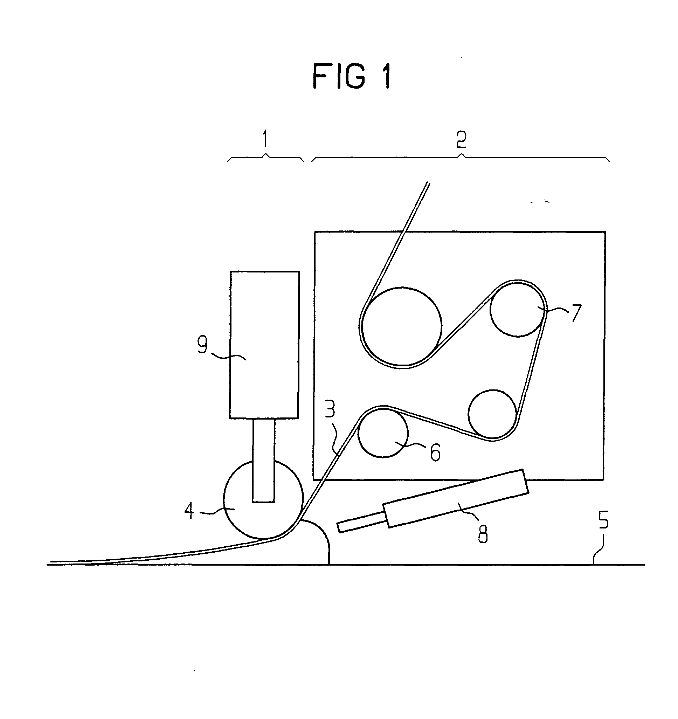

Eine derartige Vorrichtung sowie ein diesbezügliches Verfahren geht aus der amerikanischen Druckschrift US 5 597 430 hervor, die gemäß dem Ausführungsbeispiel der Fig. 1 aus zwei getrennten Bauteilen besteht, dem sogenannten Wickelteil, das den bandförmigen Faserstrang aus einer Vielzahl einzelner Fasern zusammenführt und der sogenannten Extrudereinheit, mittels der der Faserstrang mit dem thermisch aushärtbaren Harz beaufschlagt wird und auf eine entsprechende formgebende Spindel aufgewickelt wird.

Die bekannte Vorrichtung weist unter anderem den Nachteil auf, daß die zur Ausbildung des bandförmigen, aus einer Vielzahl einzelner Fasern bestehenden Stranges vorgesehene Einheit, räumlich von dem Bauteil der Anordnung getrennt angeordnet ist, durch die der bandförmig ausgebildete Strang mit Harz beaufschlagt und auf die formgebende Spindel aufgebracht wird. Mit einer derart getrennt ausgebildeten Vorrichtung ist es bspw. nicht möglich, das unter einer gewissen Vorspannung stehende Band auf Oberflächenkonturen aufzubringen, die von einer konvexen Oberflächenform abweichen. Beispielsweise vermag die bekannte Vorrichtung den bandförmig verlaufenden Strang nicht in konkav ausgebildete Mulden einzudrücken.

Zum Aushärten des mit Harz durchtränkten bandförmigen Stranges können hitzebeaufschlagte Rollenpaare sowie weitere Wärmequellen kurz vor dem mit dem Strang zu beaufschlagenden Körper vorgesehen werden, wie es beispielsweise aus Fig. 3, der obenstehenden US-Druckschrift hervorgeht, doch ergeben sich insbesondere bei Spindelkörper mit großen Durchmesser, auf deren Außenumfang das Bandmaterial aufgebracht wird, Anordnungsschwierigkeiten für die Heizelemente. Schließlich bedarf es einer beachtlichen Bodenfläche, auf der die gesamte bekannte Anordnung zu plazieren ist.

### Darstellung der Erfindung

Aufgabe der Erfindung ist es, eine Vorrichtung zum Anordnen und Verbinden einer vorgespannten, als Meterware ausgebildeten Faseranordnung auf einer Oberfläche, mit einer Zuführeinheit, die die Faseranordnung bereitstellt und gegenüber der Oberfläche einstellbar vorspannt, sowie einer Anpreß-Einheit, die die Faseranordnung gegen die Oberfläche druckbeaufschlagt mit veränderbarem Anpreßdruck in innigen Kontakt bringt, derart weiterzubilden, daß die beim Stand der Technik hervorgehobene Nachteile umgangen werden sollen. Die Vorrichtung soll kompakter im Aufbau sein und die Möglichkeit bieten, die unter Zugspannung stehende Faseranordnung auf beliebig geformte Oberflächen aufzubringen. Ferner soll ein Verfahren zum Anordnen und Verbinden einer Faseranordnung auf einer Oberfläche angegeben werden, mit dem die vorstehend genannten Aufgaben gelöst werden können.

Die Lösung der der Erfindung zugrundeliegenden Aufgabe ist im Anspruch 1 angegeben. Ein erfindungsgemäßes Verfahren ist Gegenstand des Anspruchs 12. Den Erfindungsgedanken vorteilhaft ausbildende Merkmale sind Gegenstand der Unteransprüche.

Die gemäß Oberbegriff des Anspruchs 1 angegebene Vorrichtung zum Anordnen und Verbinden einer Faseranordnung auf einer Oberfläche ist erfindungsgemäß dadurch ausgebildet, daß die Anpreß-Einheit sowie die Zuführeinheit in einer kompakten Einheit integriert sind. Innerhalb der Zuführeinheit ist wenigstens eine elektromotorisch angetriebene Rolle sowie eine abbremsbare Rolle vorgesehen, über die die vorzugsweise bandförmig ausgebildete Faseranordnung verläuft. Die Bandförderung erfolgt prozeßgesteuert, wobei die Vorspannung innerhalb des geförderten Bandes durch eine gezielte Ansteuerung der abbremsbaren Rolle erfolgt. Unmittelbar nach Austritt des Bandes aus der Zuführeinheit ist ein linear bewegliches Stellelement oder ein Gelenkarm vorgesehen, an dessen freiem Ende eine Anpreß-Rolle drehbar gelagert ist, durch die kraftbeaufschlagt die bandförmig ausgebildete Faseranordnung gegen die Oberfläche angedrückt wird. Um die Aufbringqualität der bandförmig ausgebildeten Faseranordnung auf der Oberfläche zu optimieren, erfolgt erfindungsgemäß die Stärke, mit der die Anpreß-Einheit die Faseranordnung gegen die Oberfläche drückt, in Abhängigkeit von der Vorspannung der Zuführeinheit. Insbesondere ist es hierdurch möglich, den Anpreß-Druck, mit dem die Faseranordnung gegen die Oberfläche gedrückt wird, konstant zu halten und die Vorspannung dynamisch zu verändern. Die aktive Regelung der Vorspannung gestattet es insbesondere bei der Herstellung mehrlagiger Bauteile, wie bspw. Druckbehälter oder Rohre, dafür zu sorgen, daß innere mechanische Spannungen von Lage zu Lage kontinuierlich abgebaut bzw. gezielt beeinflußt werden können. Auf diese Weise können eigenstabile Verbundwerkstücke bei möglichst geringem Materialeinsatz und großer mechanischer Belastbarkeit hergestellt werden. Auch können Wanddicken individuell eingestellt werden, indem die Vorspannung sowie der Anpreßdruck erhöht oder gesenkt werden.

Durch die erfindungsgemäße unmittelbare Kombination aus Zuführeinheit und Anpreß-Einheit ist es möglich, die vorzugsweise bandförmig ausgebildete Faseranordnung unter einem Winkel von 0° bis 90° auf die Oberfläche aufzubringen. Hierdurch ist es ferner möglich, die mit thermisch aushärtbarem Harz vorbehandelte Faseranordnung kurz vor Berührung der Oberfläche lokal mit Hilfe geeigneter Wärmequellen zu erhitzen. Beispielsweise bieten sich als Wärmequellen Infrarotstrahler, Laserstrahlen oder gasbetriebene Wärmequellen an, die aufgrund des Verlaufes des Bandes unter einem Winkel von 0° bis 90° zur Oberfläche unmittelbar an der Berührungsfläche zwischen Faseranordnung und Oberfläche vorgesehen werden können.

Die kompakte Einheit der erfindungsgemäßen Vorrichtung erlaubt es überdies, Anpreß-Einheit und Zuführeinheit zugleich beispielsweise an einen Roboterarm zu montieren, der in geeigneter Weise über eine entsprechend geformte Oberfläche geführt werden kann. Somit ist es erstmals möglich, faserverstärkte Verbundmaterialien auf nahezu beliebig geformte Oberflächen aufzubringen.

Das erfindungsgemäße Verfahren, mit dem eine als Meterware ausgebildete Faseranordnung auf eine Oberfläche aufgebracht und mit dieser verbunden wird, ist unter Verwendung der vorstehend beschriebenen Vorrichtung derart auszuführen, daß die Zuführeinheit sowie die Anpreß-Einheit geregelt werden, so daß durch eine dynamische Kompensation Schwankungen in der Vorspannung der Faseranordnung durch Einflußnahme auf den Anpreß-Druck auf die Faseranordnung ausgeglichen werden und dadurch ein konstanter Anpreßdruck auf die Faseranordnung erreicht wird.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnung exemplarisch beschrieben. Es zeigt:
- Fig. 1: schematisierte Querschnittsdarstellung durch eine kombinierte Anpreßeinheit sowie Zuführeinheit.

### Wege zur Ausführung der Erfindung, gewerbliche Verwendbarkeit

Wesentliches Merkmal der erfindungsgemäßen Vorrichtung ist die unmittelbare Kombination der Anpreßeinheit 1 mit der Zuführeinheit 2. In Fig. 1 sind Anpreß-Einheit 1 und Zuführeinheit 2 unmittelbar aneinander grenzend dargestellt. Für den Erfindungsgedanken spielt es keine Rolle, ob die Anpreßeinheit 1 und die Zuführeinheit 2 in einem gemeinsamen Gehäuse oder, wie in Fig. 1 dargestellt, in zwei getrennten Gehäusen untergebracht sind, doch ist es wesentlich, daß beide Einheiten 1 und 2 eine unmittelbare, räumliche Nähe aufweisen, so daß die aus der Zuführeinheit 2 austretende Faseranordnung 3 sofort nach Austritt von einer Anpreß-Rolle 4 der Anpreßeinheit 1 erfaßt und gegen die Oberfläche 5 gepreßt wird.

Die Zuführeinheit 2 weist wenigstens eine motorisch angetriebene Zuführ-Rolle 6 auf, die in Förderrichtung einer bremsbaren Transportrolle 7 nachgeordnet ist.

Die bandförmig ausgebildete Faseranordnung 3 kann entweder der Zuführeinheit 2 bereits mit einem thermisch aushärtbaren Harz durchtränkt zugeführt werden, wobei das Harz eine gewisse Mindesthärte aufweist, die einen bandartigen Verlauf über die in der Zuführeinheit 2 vorgesehenen Transportrollen gestattet, ohne ein Verkleben der Oberflächen der einzelnen Rollen zu verursachen. In dieser Form gelangt die mit thermisch aushärtbarem Harz vorimprägnierte, bandförmig ausgebildete Faseranordnung aus der Zuführeinheit 2 und läuft über die Anpreß-Rolle 4 der Anpreß-Einheit 1 in Richtung der mit der Faseranordnung 3 zu beaufschlagenden Oberfläche 5. Aufgrund eines Winkels im Bereich von 0° bis 90° zwischen Faserbandverlauf 3 nach Austritt aus der Zuführeinheit 2 und der Oberfläche 5, bedingt durch die unmittelbare Kombination aus Anpreßeinheit 1 und Zuführeinheit 2, kann eine Wärmeeinheit 8 in Form eines Lasers, einer Warmluftzufuhr oder in ähnlicher Ausgestaltung vorgesehen werden, so daß deren Wärmeeintrag auf die aus der Zuführeinheit 2 austretenden Faseranordnung unmittelbar vor der Kontaktierung mit der Oberfläche 5 einwirken kann. Durch die Wärmeeinwirkung wird das leicht vorgehärtete Harz innerhalb der Faseranordnung zumindest auf der, der Oberfläche 5 unmittelbar gegenüberliegenden Oberseite der Faseranordnung derart aufgeweicht, so daß eine formschlüssige Verfügung der Faseranordnung mit der Oberfläche 5 unter Krafteintrag vermittels der Anpreßeinheit 1 und der Anpreß-Rolle 4 erfolgen kann.

Für eine formgetreue Anschmiegung der erhitzten Faseranordnung an die Oberflächenkontur der Oberfläche 5 ist die Anpreß-Rolle 4 drehbar um eine Rotationsachse gelagert, die orthogonal zur Normalen der Oberfläche 5 orientiert ist, so daß die Faseranordnung 3 unmittelbar nach Austritt aus der Zuführeinheit 2 über die Unterseite der Anpreß-Rolle 4 geführt wird und durch diese normal gegen die Oberfläche 5 gedrückt wird. Der Anpreß-Druck, der durch die Anpreß-Rolle auf die Faseranordnung 3 ausgeübt wird, erfolgt über die Auslenkung eines linear beweglichen Stellelementes 9, das über die Anpreß-Einheit 1 ansteuerbar und auslenkbar ist.

Erfindungsgemäß erfolgt eine Steuerung des Anpreß-Druckes, der vermittels des Stellelementes 9 und der Anpreß-Rolle 4 auf die Faseranordnung 3 ausgeübt wird sowie eine Steuerung der Vorspannung, die entlang der Faseranordnung, bedingt durch eine gesteuerte Abbremsung der Transportrolle 7 gegenüber der motorisch angetriebenen Rolle 6 erfolgt. Auf diese Weise ist es möglich, Schwankungen in der Vorspannung der Faseranordnung durch geregelte Einflußnahme auf den Anpreß-Druck, mit der die Faseranordnung gegen die Oberfläche 5 gedrückt wird, auszugleichen. Durch diese aktive Regelung zwischen Anpreß-Druck und Vorspannung kann sichergestellt werden, daß der Anpreß-Druck, mit der die in Vorspannung befindliche Faseranordnung gegen die Oberfläche gedrückt wird, konstant gehalten werden kann. Die unter Vorspannung auf die Oberfläche aufgebrachte Faseranordnung kann auch in Art eines Schrumpfsitzes auf der Oberfläche aufgebracht werden. So kann bei Verbundwerkstücken mit einem Kern, bspw. einem Metallkern, um den in mehreren Lagen Faseranordnungen aufgebracht sind, mittels thermischer Schrumpfung eine innige Verbindung zwischen dem Kern und den Faseranordnungen hergestellt werden. Auch spielt die Wahl der Zugspannung, mit der die einzelnen Faserlagen um den Kern gewickelt werden, eine entscheidende Rolle für den Paßsitz der Faserlagen auf dem Kern. Auf diese Art sind Druckbehälter ebenso wie bspw. Laufräder herstellbar.

Durch die erfindungsgemäße Ausbildung der Vorrichtung zum Anordnen und Verbinden einer vorgespannten, als Meterware ausgebildeten Faseranordnung auf eine Oberfläche, sind folgende Vorteile nennen:

Die Vorrichtung ist als kompaktes System direkt an einen Wicklungskopf einer Maschine oder an einen Roboter anbringbar, der höchst flexibel einsetzbar ist.

Die unter Vorspannung stehende Faseranordnung kann auf Oberflächengeometrien aufgebracht werden, die offen ausgebildet und konkave und konvexe Krümmungen aufweisen können.

Durch Aufbringen der bandförmigen Faseranordnung unter einem Winkel von 0° bis 90° auf die formgebende Oberfläche ist es möglich, mit thermisch aushärtbarem Harz vorbehandelte Faseranordnungen, die bereits über eine Mindesthärte verfügen, unter gezielter Einbringung von Wärme kurz vor in Kontaktbringen mit der Oberfläche diese lokal zu erwärmen und eine leichte Verformbarkeit der vorbehandelten Faseranordnung zu erreichen.

Durch eine kontrollierte Regelung zwischen Anpreß-Druck und Vorspannung ist es überdies möglich, eine reproduzierbare hohe Qualität der Verlegung einer Faseranordnung zur Herstellung einer aus einem faserverstärkten Verbundwerkstoff bestehenden Form zu gewährleisten.

### Bezugszeichenliste

- 1: Anpreßeinheit
- 2: Zuführeinheit
- 3: Bandförmige Faseranordnung
- 4: Anpreß-Rolle
- 5: Oberfläche
- 6: Motorisch angetriebene Zuführ-Rolle
- 7: Bremsbare Tansportrolle
- 8: Wärmequelle, Laser, Warmluftzufuhr
- 9: Stellelement

## Patentansprüche

1. Vorrichtung zum Anordnen und Verbinden einer vorgespannten, als Meterware ausgebildeten Faseranordnung (3) auf einer Oberfläche (5), mit einer Zuführeinheit (2), die die Faseranordnung (3) bereitstellt und gegenüber der Oberfläche (5) einstellbar vorspannt, sowie einer Anpresseinheit (1), die die Faseranordnung (3) gegen die Oberfläche (5) druckbeaufschlagt mit veränderbaren Anpreßdruck in innigen Kontakt bringt,
**dadurch gekennzeichnet,**
**daß** die Anpresseinheit (1) sowie die Zuführeinheit (2) in einer kompakten Einheit integriert sind, und daß beide Einheiten derart ansteuerbar sind, daß die Stärke mit der die Anpresseinheit (1) die Faseranordnung (3) gegen die Oberfläche (5) drückt in Abhängigkeit von der Vorspannung der Zuführeinheit (2) erfolgt.

2. Vorrichtung nach Anspruch 1,
**dadurch gekennzeichnet, daß** die Anpresseinheit (1) ein einseitig fest angelenktes, linear bewegliches Stellelement (9) oder einen Gelenkarm aufweist, an dessen freiem Ende eine Anpreß-Rolle (4) drehbar gelagert ist, deren Rotationsachse orthogonal zur Normalen der Oberfläche (5) orientiert ist, so daß die Faseranordnung (3) unmittelbar nach Austritt aus der Zuführeinheit (2) über die Unterseite der Anpreß-Rolle (4) geführt ist und durch die Anpreß-Rolle (4) normal gegen die Oberfläche (5) drückbar ist.

3. Vorrichtung nach Anspruch 2,
**dadurch gekennzeichnet, daß** die Anpreß-Rolle (4) unmittelbar über der Oberfläche (5) angeordnet ist und die Faseranordnung (3) je nach Auslenkung des Stellelementes (9) senkrecht auf die Oberfläche (5) andrückt.

4. Vorrichtung nach einem der Ansprüche 1 bis 3,
**dadurch gekennzeichnet, daß** die Zuführeinheit (2) wenigstens eine angetriebene Zuführrolle (6) sowie mindestens eine bremsbare Transportrolle (7) aufweist, über die die Faseranordnung (3) geführt ist.

5. Vorrichtung nach einem der Ansprüche 1 bis 4,
**dadurch gekennzeichnet, daß** die in Längsrichtung vorgespannte Faseranordnung (3) nach Austritt aus der Zuführeinheit (2) der Anpreß-Rolle (4) relativ zu der Oberfläche (5) unter einem Winkel von 0° bis 90° zuführbar ist.

6. Vorrichtung nach einem der Ansprüchen 1 bis 5,
**dadurch gekennzeichnet, daß** die Faseranordnung (3) Fasern aufweist, die mit thermoplastischen Harzen vorbehandelt sind.

7. Vorrichtung nach einem der Ansprüche 1 bis 6,
**dadurch gekennzeichnet, daß** eine als Infrarotstrahler, Laser oder Warmluftzuführung ausgebildete Wärmequelle (8) vorgesehen ist, welche die Faseranordnung (3) vor Kontaktierung mit der Oberfläche (5) erhitzt.

8. Vorrichtung nach einem der Ansprüche 4 bis 7,
**dadurch gekennzeichnet, daß** die Ansteuerung des Stellelements (9) sowie die Ansteuerung der bremsbaren Transportrolle (7) zur Kompensation von Schwankungen der Vorspannung elektronisch erfolgt.

9. Vorrichtung nach einem der Ansprüche 2 bis 8,
**dadurch gekennzeichnet, daß** das Stellelement (9) als Hubzylinder ausgebildet ist.

10. Vorrichtung nach einem der Ansprüche 1 bis 9,
**dadurch gekennzeichnet, daß** die Faseranordnung mittels der Zuführeinheit (2) auf die Oberfläche (5) auflegbar ist.

11. Verfahren zum Anordnen und Verbinden einer vorgespannten, als Meterware ausgebildeten Faseranordnung (3) auf einer Oberfläche (5), mit einer Zuführeinheit (2), die die Faseranordnung (3) bereitstellt und gegenüber der Oberfläche (5) einstellbar vorspannt, sowie einer Anpresseinheit (1), die die Faseranordnung (3) gegen die Oberfläche (5) druckbeaufschlagt mit veränderbaren Anpreßdruck in innigen Kontakt bringt,
**dadurch gekennzeichnet, daß** die Zuführeinheit (2) sowie die Anpresseinheit (1) derart geregelt werden, daß durch eine dynamische Kompensation, Schwankungen in der Vorspannung der Faseranordnung (3) durch Einflußnahme auf den Anpreß-druck auf die Faseranordnung (3) ausgeglichen werden und dadurch ein konstanter Anpreßdruck auf die Faseranordnung (3) erreicht wird.
